# EUROPÄISCHE PATENTANMELDUNG

(11) **EP 3 793 159 A1**
(43) Veröffentlichungstag der Anmeldung: **17.03.2021**
(21) Anmeldenummer: 19196377.6
(22) Anmeldetag: 10.09.2019
(51) Int. Cl.: H04L 29/06, H04W 12/00, G06F 21/84, G06F 21/62

(54) **ZUGANGSSTEUERUNG FÜR PRIVATE NACHRICHTEN**

(71) Anmelder: CONNEXCOM AG, 6340 Baar (CH)
(72) Erfinder: WANECK, Peter, 6315 Oberägeri (CH)
(74) Vertreter: Sonn & Partner Patentanwälte

(57) **Zusammenfassung**

Computerimplementiertes Verfahren zur Zugangssteuerung zu einer privaten Nachricht (1) eines Benutzers eines ersten Endgeräts (4) an einen Benutzer eines zweiten Endgeräts (5), das Verfahren umfassend die Schritte:
- Erfassen (8) der privaten Nachricht (1) und des Empfängers (3) am ersten Endgerät (4);
- Ermitteln (9) einer Adresse des zweiten Endgeräts (5) auf Basis des erfassten Empfängers;
- Senden einer Abfrage (13, 16) nach dem Status einer Zugangssteuerung vom ersten Endgerät (4) an das zweite Endgerät (5) ;
- Senden einer privaten Nachricht (1) vom ersten Endgerät (4) an das zweite Endgerät (5), nur wenn die Abfrage (16) vom zweiten Endgerät (5) mit einer Statusmitteilung (19) beantwortet wurde und gemäß der Statusmitteilung (19) die Zugangssteuerung (17) am zweiten Endgerät (5) aktiv ist.

## Beschreibung

Die Erfindung betrifft ein computerimplementiertes Verfahren zur Zugangssteuerung zu einer privaten Nachricht eines Benutzers eines ersten Endgeräts an einen Benutzer eines zweiten Endgeräts sowie entsprechende Computerprogrammprodukte für das erste und das zweite Endgerät.

Im Zusammenhang mit dem Austausch von privaten Nachrichten sind für viele Aspekte bereits Lösungen bekannt. Beispielsweise ist es mittlerweile gängig, dass private Nachrichten zwischen den beiden teilnehmenden Endgeräten verschlüsselt übertragen werden ("end-to-end Verschlüsselung"). Dadurch wird es für Dritte, die die Datenkommunikation zwischen den Endgeräten mitlesen können, beispielsweise Weise als Vermittler entlang der Datenverbindung notwendig sind, erheblich erschwert oder praktisch unmöglich, den Inhalt privater Nachrichten zu erkennen. Davon unabhängig sind die Endgeräte üblicherweise gegenüber Dritten, die vorübergehend physikalischen Zugriff auf das jeweilige Endgerät bekommen können, abgesichert. Zu diesem Zweck werden die privaten Nachrichten üblicherweise auf beiden Endgeräten nur verschlüsselt gespeichert. Eine Entschlüsselung erfordert eine Authentifikation des Benutzers, beispielsweise anhand biometrischer Merkmale wie Fingerabdruck oder Gesichtserkennung und/oder anhand eines Entsperrcodes.

Ein weiterer Aspekt ist das mitlesen von privaten Nachrichten durch unbefugte Dritte. Dabei werden die oben erwähnten Sicherheitsmechanismen dadurch überwunden, dass der berechtigte Benutzer eines der beiden Endgeräte den Inhalt der privaten Nachricht liest und dafür z.B. auf einem Bildschirm des Endgeräts anzeigt. Der Dritte versucht bei diesem Szenario Sicht auf denselben Bildschirm zu erlangen und kann somit ebenfalls den Inhalt der privaten Nachricht lesen. Eine ähnliche Situation ist gegeben, wenn der berechtigte Benutzer einem Dritten zu einem anderen Zweck freiwillig Zugriff auf ein Endgerät geben möchte und sich dafür authentifiziert. Zugleich möchte er vermeiden, dass sich dieser - an sich legitimierte - Zugriff auch auf den Inhalt privater Nachrichten erstreckt. Die WO 2018/229246 A1 schlägt zur Absicherung gegen solche Zugriffe eine kontinuierliche Überwachung der Benutzer des Endgeräts vor. Dabei kann während bestehendem Zugriff auf das Endgerät der Zugang zu privaten Daten eingeschränkt werden, beispielsweise wenn mehr als ein Benutzer erkannt wird.

Die in der WO 2018/229246 A1 vorgeschlagenen Maßnahmen helfen zunächst vorrangig im Benutzer des betreffenden Endgeräts, d. h. der den Zugang zu seinen privaten Daten, die auf seinem Endgerät gespeichert sind, unabhängig von den sonstigen Daten einschränken möchte, die ebenfalls auf seinem Endgerät gespeichert sein können zu denen er dritten möglicherweise vorübergehend Zugang ermöglichen will. D. h. diese Maßnahmen schützen vorrangig den Empfänger privater Nachrichten davor, dass Dritte unerwünschter Weise Zugang zu den von ihm empfangenen privaten Nachrichten erhalten oder überhaupt von der Existenz dieser Nachrichten erfahren.

Ein Aspekt, der bei den bekannten Lösungen häufig vernachlässigt wird, ist das Interesse des Senders einer privaten Nachricht, dass die von ihm gesendete private Nachricht am Endgerät des Empfängers nicht von unbefugten Dritten gelesen werden kann. Die Verschlüsselung der privaten Nachricht, sodass nur der berechtigte Empfänger sie entschlüsseln kann, bietet diesbezüglich nur begrenzten Schutz. Spätestens nachdem der berechtigte Empfänger die Nachricht entschlüsselt hat, ist der Schutz des Inhalts dieser Nachricht von den weiteren Vorkehrungen am Endgerät des Empfängers abhängig. Auf diese Vorkehrungen hat der Sender typischerweise und bei den oben erwähnten Verfahren keinen Einfluss.

Es ist eine Aufgabe der Erfindung, die Sicherheit des Absenders einer privaten Nachricht gegen einen unerwünschten Zugang am Endgerät des Empfängers zu verbessern.

Das erfindungsgemäße Verfahren der eingangs angeführten Art umfasst die Schritte:
- Erfassen der privaten Nachricht und des Empfängers am ersten Endgerät;
- Ermitteln einer Adresse des zweiten Endgeräts auf Basis des erfassten Empfängers;
- Senden einer Abfrage nach dem Status einer Zugangssteuerung vom ersten Endgerät an das zweite Endgerät;
- Senden einer privaten Nachricht vom ersten Endgerät an das zweite Endgerät, nur wenn die Abfrage vom zweiten Endgerät mit einer Statusmitteilung beantwortet wurde und gemäß der Statusmitteilung die Zugangssteuerung am zweiten Endgerät aktiv ist.

Das Verfahren sieht somit vor, dass die private Nachricht vom Absender zurückgehalten wird (genauer: von seinem Endgerät; hier als erstes Endgerät bezeichnet), falls der Empfänger auf seinem Endgerät (hier als zweites Endgerät bezeichnet) nicht eine vom Absender erwartete Zugangssteuerung aktiviert hat. Auf diese Weise kann vom Absender sichergestellt werden, dass die private Nachricht nur an ein zweites Endgerät mit aktiver Zugangssteuerung übermittelt wird, und so die Sicherheit des Inhalts der privaten Nachricht und letztlich die Sicherheit des Absenders, der die Vertraulichkeit dieses Inhalts erwartet oder darauf angewiesen ist, verbessert.

Optional kann vorgesehen sein, dass das erste Endgerät eine Fehlermeldung ausgibt und die Nachricht löscht, wenn gemäß der Statusmitteilung die Zugangssteuerung am zweiten Endgerät dauerhaft inaktiv ist. Eine dauerhaft inaktive Zugangssteuerung liegt beispielsweise vor, wenn das zweite Endgerät nicht die technischen Voraussetzungen für eine Zugangssteuerung erfüllt (z.B. fehlende Software- und/oder Hardwarekomponenten) oder wenn Zugangssteuerung am zweiten Endgerät dauerhaft deaktiviert wurde (z.B. durch eine entsprechende Systemkonfiguration). In solchen Fällen ist nicht absehbar, ob und wann eine Übermittlung der privaten Nachricht ohne Kompromittierung der Sicherheit möglich sein wird, weshalb die Nachricht gelöscht werden kann. Um den Benutzer des ersten Endgeräts darüber zu informieren, dass der Empfänger keinen Zugriff auf die private Nachricht erhält, eine Fehlermeldung am ersten Endgerät ausgegeben. Diese Fehlermeldung kann zweckmäßig eine Begründung enthalten, damit der Absender Möglichkeit erhält, in Empfänger über einen anderen Kanal zu kontaktieren und beispielsweise zur Aktivierung der Zugangssteuerung aufzufordern.

Weiters kann beispielsweise vorgesehen sein, dass das erste Endgerät einen Zeitschalter mit einer vordefinierten Dauer startet, wenn gemäß der Statusmitteilung die Zugangssteuerung am zweiten Endgerät vorübergehend inaktiv ist, und nach Ablauf des Zeitschalters eine neue Abfrage nach dem Status einer Zugangssteuerung an das zweite Endgerät sendet. Dadurch wird erreicht, dass die private Nachricht nicht während der Inaktivität der Zugangssteuerung auf das zweite Endgerät gelangt und während dieses Zeitraums mit einer höheren Wahrscheinlichkeit einem unberechtigten Zugriff ausgesetzt wäre. Der Benutzer des zweiten Endgeräts kann die Zugangssteuerung vorübergehend deaktivieren oder ausschalten. Dies könnte beispielsweise dazu dienen, berechtigten Dritten Zugang zu privaten Daten auf dem zweiten Endgerät zu ermöglichen. Die Berechtigung des betreffenden Dritten besteht dabei jedoch für bestimmte private Daten. Bevor er einen solchen Zugang ermöglicht, wird sich der Benutzer des zweiten Endgeräts daher davon überzeugen, welche privaten Daten auf dem zweiten Endgerät gespeichert sind und gegebenenfalls solche privaten Daten löschen, zu denen der betreffende Dritte keinen Zugang haben soll, und erst danach die Zugangssteuerung vorübergehend deaktivieren. Wenn nun während des Zugangs des Dritten neue private Nachrichten am zweiten Endgerät eintreffen, hätte dessen Benutzer keine Möglichkeit, diese vorab zu prüfen und allenfalls vor dem Dritten zu verbergen. Die oben erwähnte Variante des gegenständlichen Verfahrens entschärft dieses Problem, indem für den Zeitraum der inaktiven Zugangssteuerung private Nachrichten vom Absender zurückgehalten werden. Dabei versucht das erste Endgerät nach der vordefinierten Dauer erneut eine Zustellung, unter der Bedingung, dass die Zugangssteuerung am zweiten Endgerät dann aktiv ist. Die vordefinierte Dauer kann beispielsweise 1 Minute sein. Der Zeitschalter zur Überwachung der vordefinierten Dauer befindet sich am ersten Endgerät, d. h. unter der Kontrolle des Absenders der privaten Nachricht. So lange neue Zustellversuche unternommen werden, gibt das erste Endgerät keine Fehlermeldung aus. Der Benutzer des ersten Endgeräts kann durch eine geeignete Statusanzeige darüber informiert werden, dass die private Nachricht noch nicht zugestellt ist. Sobald der Benutzer des zweiten Endgeräts die Zugangssteuerung wieder aktiviert, wird er somit die private Nachricht erhalten, d. h. zum nächstmöglichen Zeitpunkt ohne Kompromittierung der Sicherheit der privaten Nachricht.

Das Verfahren kann optional eine bestimmte Form der Zugangssteuerung betreffend, die am zweiten Endgerät verlangt ist, bevor das erste Endgerät die private Nachricht sendet. Im Einzelnen kann auf dem zweiten Endgerät bei aktiver Zugangssteuerung am zweiten Endgerät ein Zugang zu einer vom ersten Endgerät empfangenen privaten Nachricht eingeschränkt oder uneingeschränkt sein, wobei das Verfahren die folgenden Schritte bei uneingeschränktem Zugang umfasst:
- Erfassen eines Bildsignals mit einer Kamera des zweiten Endgeräts;
- Durchführen einer Gesichtsdetektion mit dem erfassten Bildsignal;
- kontinuierliches Überwachen der bei der Gesichtsdetektion ermittelten Anzahl der Gesichter in dem erfassten Bildsignal, wobei der Zugang eingeschränkt wird, wenn die Anzahl der Gesichter größer als eins ist.

Es kann somit sichergestellt werden, dass der uneingeschränkte Zugang nur so lange gewährt wird, als im Sichtfeld der Kamera (d.h. dem Bereich den die Kamera erfasst) nur eine Person detektiert wird. Sobald das Gesicht einer zweiten Person in das Sichtfeld der Kamera eintritt, wird der Zugang eingeschränkt, d.h. das zweite Endgerät wird auf eingeschränkten Zugang umgestellt. Die Benutzer des zweiten Endgeräts haben danach weiterhin Zugang zu den sonstigen, nicht als privat markierten, Daten, welche auf dem zweiten Endgerät gespeichert sind. Auf diese Weise wird ein Ausspähen der privaten Daten durch einen Dritten erschwert. Es können beispielsweise private Kontakte und sämtliche Hinweise auf die Kommunikation mit den privaten Kontakten vor anderen Personen als dem autorisierten Benutzer des zweiten Endgeräts geheim gehalten werden. Die Markierung von Daten als privat kann durch den Benutzer erfolgen und wird am zweiten Endgerät abgespeichert. Beispielsweise kann der Benutzer einen existenten Kontakt als "privat" markieren oder er erstellt einen neuen Kontakt mit dem Hinweis "privat". Anschließend behandelt das zweite Endgerät alle mit diesem Kontakt verknüpften Daten als private Daten, z.B. frühere Anrufe, Textnachrichten, E-Mails, Chatnachrichten, die Kontaktinformationen selbst, oder mit dem Kontakt verknüpfte Bilder oder Videos. Die vom ersten Endgerät empfangene private Nachricht wird jedenfalls, d. h. ohne erforderliche Interaktion mit dem Benutzer, den privaten Daten zugerechnet und ist somit bei einem eingeschränkten Zugang nicht zugänglich.

Wenn das zweite Endgerät einen Bildschirm zur Anzeige von privaten und sonstigen Daten aufweist, können optional die privaten Daten bei eingeschränktem Zugang vollständig ausgeblendet werden und nur die sonstigen Daten angezeigt werden. D.h. der Zugang zu den privaten Daten wird nicht lediglich durch Unkenntlichmachung eingeschränkt, sondern in einer Weise, dass bei einem eingeschränkten Zugang kein Hinweis auf die Existenz dieser Daten ersichtlich ist. Insbesondere sollen unautorisierte Dritte nicht erkennen können, dass sie nur einen eingeschränkten Zugang haben.

In diesem Zusammenhang kann beispielsweise zusätzlich vorgesehen sein, dass bei uneingeschränktem Zugang ein visueller Hinweis auf den uneingeschränkten Zugang angezeigt wird. Somit kann ein Benutzer bei uneingeschränktem Zugang erkennen, dass nun sowohl sonstige als auch private Daten angezeigt werden und es somit einen vollständigen freien Zugang zu allen Daten hat. Der visuelle Hinweis kann z.B. ein grüner Rahmen am Bildschirm sein. Ein eingeschränkter Zugang ist für den berechtigten Benutzer somit an der Abwesenheit des visuellen Hinweises erkennbar; für den nicht berechtigten Benutzer ist der eingeschränkte Zugang jedoch nicht erkennbar, weil dieser Benutzer den visuellen Hinweis nicht kennt oder erwartet.

Gemäß einer weiteren Variante können bei eingeschränktem Zugang Ereignisse betreffend private Daten in einer eingeschränkten (z.B. zensierten) Form auf dem Bildschirm angezeigt werden. Diese Funktion soll es dem Benutzer des zweiten Endgeräts ermöglichen, auch bei eingeschränktem Zugang (z.B., wenn das zweite Endgerät nicht oder nicht alleine verwendet wird) auf Ereignisse im Zusammenhang mit privaten Daten (z.B. eine Nachricht von einem privaten Kontakt) hingewiesen zu werden. Beispielsweise kann ein Anruf eines privaten Kontakts als "Unbekannte Nummer" angezeigt werden, wenn z.B. ein Smartphone offen am Tisch liegt.

Im Hinblick auf den Beginn der kontinuierlichen Überprüfung ist es günstig, wenn bei aktiver Zugangssteuerung zum Erlangen des uneingeschränkten Zugangs eine Authentifizierung eines Benutzers durchgeführt wird, wobei vor einer Freigabe des uneingeschränkten Zugangs ein Erfassen eines Bildsignals mit der Kamera des zweiten Endgeräts, Durchführen einer Gesichtsdetektion mit dem erfassten Bildsignal und Ermittelten der Anzahl der Gesichter in dem erfassten Bildsignal erfolgt, wobei die Freigabe nur erfolgt, wenn die Anzahl der Gesichter genau eins ist. Selbst bei einer erfolgreichen Authentifizierung wird der uneingeschränkte Zugang nur dann freigegeben, wenn keine Beobachter und potentiellen Mitleser detektiert werden.

Weiters kann optional vorgesehen sein, dass die Authentifizierung eine biometrische Authentifizierung, insbesondere eine Gesichtsidentifikation und/oder eine Irisidentifikation umfasst. In diesem Fall können die Authentifizierung und die Ermittlung der Anzahl der Gesichter auf Basis derselben Bilddaten durchgeführt werden. Alternativ oder zusätzlich können selbstverständlich auch andere Faktoren zur Authentifizierung verwendet werden, z.B. ein Passwort oder Fingerabdruck.

Bei einer weiteren Variante des gegenständlichen Verfahrens kann die Gesichtsidentifikation parallel zur Überprüfung der Anzahl der Gesichter regelmäßig oder stichprobenartig wiederholt werden. Dadurch kann sichergestellt werden, dass ein unautorisierter Benutzer, der im gleichen Moment im Sichtfeld der Kamera des zweiten Endgeräts erscheint, in dem der autorisierte Benutzer das Sichtfeld der Kamera verlässt, uneingeschränkten Zugang erhält.

Die das erste Endgerät betreffenden Verfahrensmerkmale können im Rahmen der gegenständlichen Erfindung beispielsweise als Computerprogrammprodukt realisiert sein, das direkt in den internen Speicher eines digitalen Computers geladen werden kann und Softwarecodeabschnitte umfasst, mit denen die am ersten Endgerät auszuführenden Schritte gemäß einer oder mehrerer der beschriebenen Varianten ausgeführt werden, wenn das Computerprogramm auf einem Computer läuft.

Die das zweite Endgerät betreffenden Verfahrensmerkmale können im Rahmen der gegenständlichen Erfindung beispielsweise als Computerprogrammprodukt realisiert sein, das direkt in den internen Speicher eines digitalen Computers geladen werden kann und Softwarecodeabschnitte umfasst, mit denen die am zweiten Endgerät auszuführenden Schritte gemäß einer oder mehrerer der beschriebenen Varianten ausgeführt werden, wenn das Computerprogramm auf einem Computer läuft.

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. Dabei zeigen im Einzelnen:
Fig. 1 schematisch ein Datenflussdiagramm einer privaten Nachricht von einem Absender an einen Empfänger;
Fig. 2 schematisch ein Sequenzdiagramm eines Verfahrens zur Zugangssteuerung zu einer privaten Nachricht eines Benutzers eines ersten Endgeräts an einen Benutzer eines zweiten Endgeräts;
Fig. 3 schematisch den Ablauf einer Zugangssteuerung am zweiten Endgerät;
Fig. 4 schematisch den Ablauf einer erweiterten Variante des Verfahrens gemäß Fig. 3;
Fig. 5a schematisch ein mobiles Endgerät bei gesperrtem Zugang;
Fig. 5b schematisch ein mobiles Endgerät bei uneingeschränktem Zugang;
Fig. 5c schematisch ein mobiles Endgerät bei eingeschränktem Zugang;
Fig. 6a schematisch einen Anwendungsfall für einen uneingeschränkten Zugang auf einem mobilen Endgerät; und
Fig. 6b schematisch einen Anwendungsfall für einen eingeschränkten Zugang auf einem mobilen Endgerät.

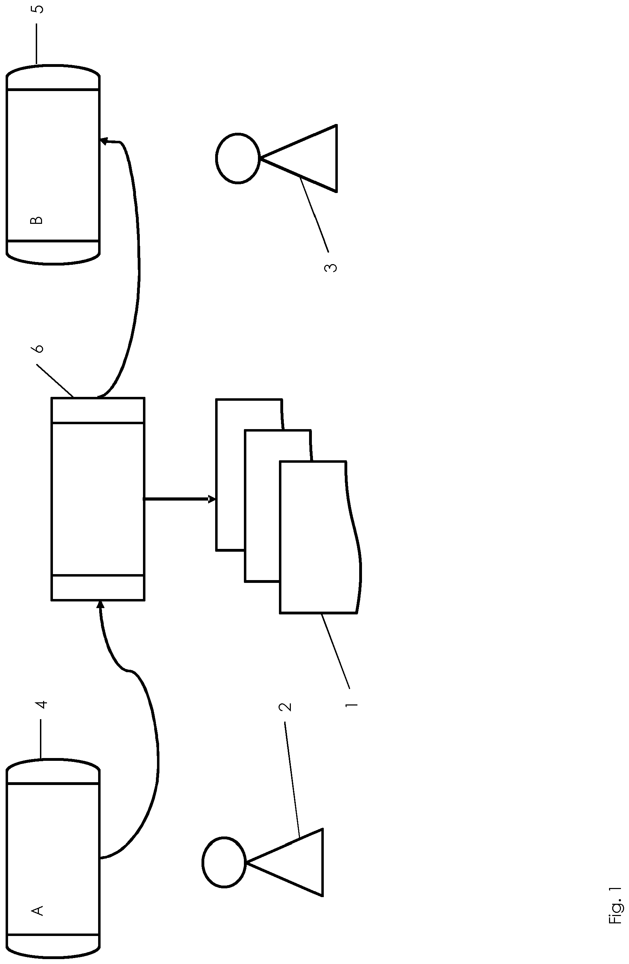

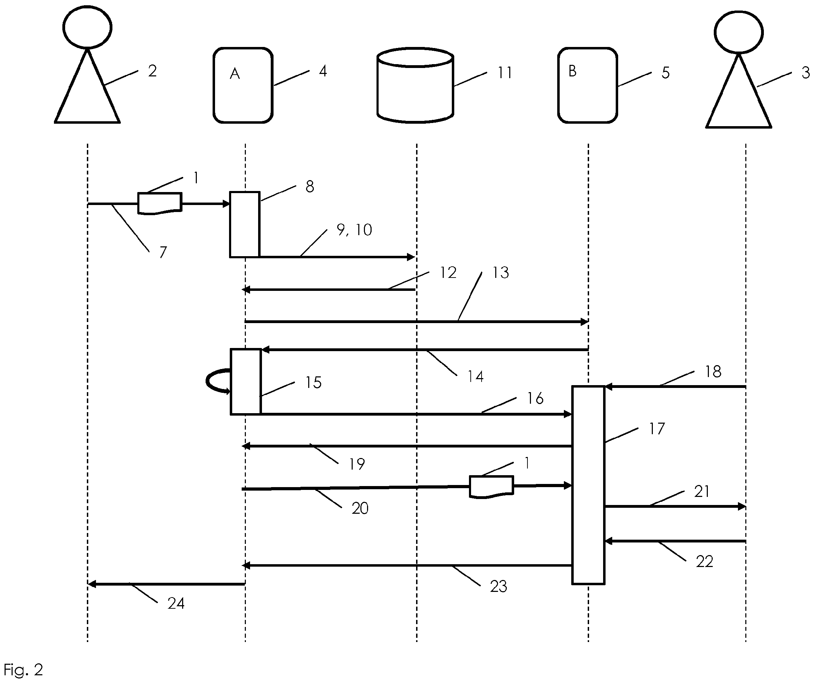

Fig. 1 zeigt den Datenfluss einer privaten Nachricht 1 zwischen einem Absender 2 und einem Empfänger 3. Der Absender 2 ist Benutzer eines ersten Endgerät 4. Der Empfänger 3 ist Benutzer eines zweiten Endgerät 5. Die private Nachricht 1 wird in Form eines oder mehrerer verschlüsselter Datenpakete 6 von dem ersten Endgerät 4 an das zweite Endgerät 5 übermittelt, z.B. via Internet. Bevor es zu einer Übermittlung der privaten Nachricht 1 kommt, sieht das gegenständliche Verfahren mehrere Schritte vor, die anhand des in Fig. 2 dargestellten, beispielhaften Ablaufs genauer erläutert werden.

Das Sequenzdiagramm in Fig. 2 zeigt die Schritte bei einer beispielhaften Ausführung des Verfahrens gemäß der vorliegenden Anmeldung mehr im Einzelnen. Es betrifft den Austausch einer privaten Nachricht 1 zwischen dem Absender 2 und dem Empfänger 3 mittels der Endgeräte 4, 5. Zunächst wird die private Nachricht 1 zusammen mit einer Identifikation des Empfängers 3 am ersten Endgerät 4 erfasst 7. Dabei gibt der Absender 2 an, dass er eine private Nachricht 1 übermitteln möchte. Außerdem kann optional der Absender 2 gewünschte Parameter eine Zugangssteuerung auf der Seite des Empfängers 3 festlegen. Typischerweise wird der Absender 2 am ersten Endgerät 4 ebenfalls eine entsprechende Zugangssteuerung aktiviert haben. Daher wird sich der Absender 2 vor Beginn der Erfassung einer privaten Nachricht zunächst gegenüber dem ersten Endgerät 4 authentifizieren. Die Identifikation des Empfängers 3 kann beispielsweise durch Auswahl aus einer Kontaktliste oder einem Adressbuch erfolgen. Die Parameter der Zugangssteuerung können spezifisch für die private Nachricht 1 oder für alle private Nachrichten festgelegt werden. Zu diesen Parameter im kann beispielsweise eine zeitliche Limitierung des Zugriffs oder der Aufbewahrung auf Seiten des Empfängers 3 zählen. Außerdem kann über derartige Parameter festgelegt werden, ob der Empfänger 3 die private Nachricht 1 weitergeben kann oder aber die Zugangssteuerung am zweiten Endgerät 5 eine solche Weitergabe grundsätzlich verhindert. Die private Nachricht 1 sowie die assoziierten Parameter der Zugangssteuerung können in einem gesicherten (insbesondere verschlüsselten) Zwischenspeicher am ersten Endgerät 4 bis zum Abschluss des Verfahrens aufbewahrt werden.

Während oder nach der Erfassung 8 der privaten Nachricht 1 der Identifikation des Empfängers 3, frühestens wenn eine Identifikation zumindest eines Empfängers erfasst ist, ermittelt 9 das erste Endgerät eine Adresse des zweiten Endgeräts 5 auf Basis der erfassten Identifikation des Empfängers 3. Dazu wird beispielsweise eine Abfrage 10 an eine Adressdatenbank 11 gesendet. Die Adressdatenbank 11 kann lokal am ersten Endgerät 4 vorliegen oder durch einen verbundenen Dienst auf einem entfernten Server bereitgestellt werden. Als Antwort auf die Abfrage 10 übermittelt die Adressdatenbank 11 die gesuchte Adresse 12 des zweiten Endgeräts 5 an das erste Endgerät 4.

Mit der nun vorliegenden Adresse 12 sendet das erste Endgerät 4 eine Abfrage 13 nach dem Status einer Zugangssteuerung an das zweite Endgerät 5. Die Abfrage 13 enthält optional auch die vom Absender 2 gewünschten Parameter der Zugangssteuerung. In dem in Fig. 2 gezeigten Beispiel ist die Zugangssteuerung am zweiten Endgerät 5 zum Zeitpunkt der ersten Abfrage 13 vorübergehend inaktiv. Das zweite Endgerät 5 sendet eine entsprechende Statusmitteilung 14 an das erste Endgerät 4. Gemäß der Statusmitteilung 14 ist die Zugangssteuerung am zweiten Endgerät 5 vorübergehend inaktiv. Das erste Endgerät 4 startet daraufhin einen Zeitschalter 15 für die vordefinierte Dauer von 1 Minute. Nach Ablauf des Teilzeitschalters 15 sendet das erste Endgerät 4 eine neue Abfrage 16 nach dem Status einer Zugangssteuerung an das zweite Endgerät 5. In der Zwischenzeit hat der Empfänger 3 die Zugangssteuerung 17 am zweiten Endgerät 5 aktiviert 18. Die zweite Statusmitteilung 19, die vom zweiten Endgerät 5 als Antwort auf die zweite Abfrage 16 an das erste Endgerät 4 gesendet wird, besagt somit, dass die Zugangssteuerung 17 am zweiten Endgerät 5 aktiv ist. Falls der Absender 2 Parameter der Zugangssteuerung definiert hat, wird die Erfüllung dieser Parameter vom zweiten Endgerät 5 ebenfalls überprüft und die einzelnen Parameter gegebenenfalls in der Statusmitteilung 19 bestätigt oder abgelehnt.

Da die zweite Abfrage 16 somit mit einer Statusmitteilung 19 beantwortet wurde, gemäß der die Zugangssteuerung 17 am zweiten Endgerät 5 aktiv ist (und - falls vorhanden - alle Parameter der Zugangssteuerung wunschgemäß erfüllt werden), sendet 20 das erste Endgerät 4 die private Nachricht 1 an das zweite Endgerät 5. Das zweite Endgerät 5 benachrichtigt 21 in Empfänger 3 über die empfangene private Nachricht 1. Der Empfänger 3 kann somit bei aktiver Zugangssteuerung 17 und entsprechend geschützter Umgebung auf die private Nachricht 1 am zweiten Endgerät 5 zugreifen 22 und diese lesen. Sobald das zweite Endgerät 5 den Zugriff registriert, kann es eine Lesebenachrichtigung 23 an das erste Endgerät 4 senden. Die Lesebenachrichtigung 23 kann den Zeitpunkt des Zugriffs 22 enthalten. Das erste Endgerät 4 kann daraufhin den Absender 2 darauf hinweisen 24, dass die private Nachricht 1 vom Empfänger 3 erhalten wurde. Zu diesem Zeitpunkt kann die private Nachricht 1 beispielsweise vom ersten Endgerät 4 gelöscht werden. Zusätzlich kann vorgesehen sein, dass der Absender 2 die private Nachricht 1 auch am zweiten Endgerät 5 per Fernsteuerung löschen kann.

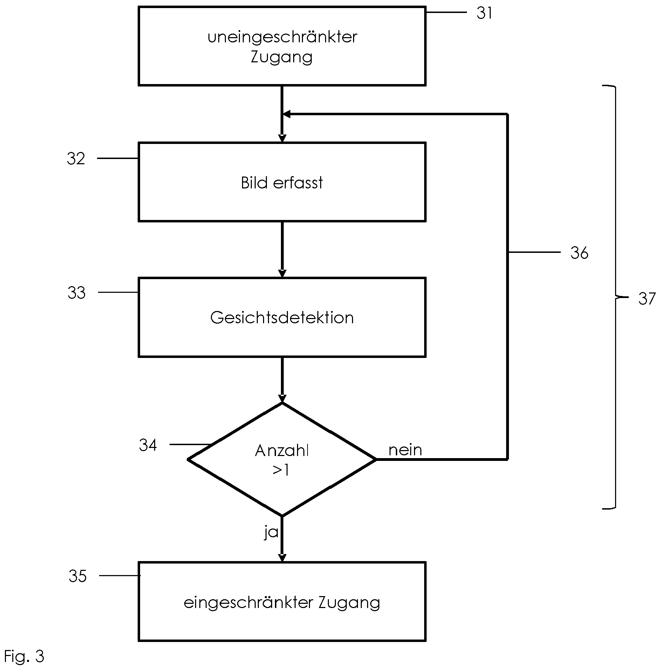

Die Figuren 3 bis 6b illustrieren ein Beispiel für die Zugangssteuerung 17 am zweiten Endgerät 5 im Detail:

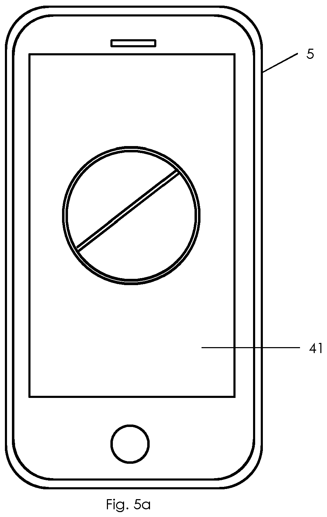

Fig. 3 zeigt den Ablauf eines computerimplementierten Verfahrens zur Zugangssteuerung des zweiten Endgeräts 5 (vgl. Fig. 5a-c). Auf dem Endgerät 5 sind private Daten und sonstige Daten gespeichert. Der Zugang zu den privaten Daten kann eingeschränkt oder uneingeschränkt sein.

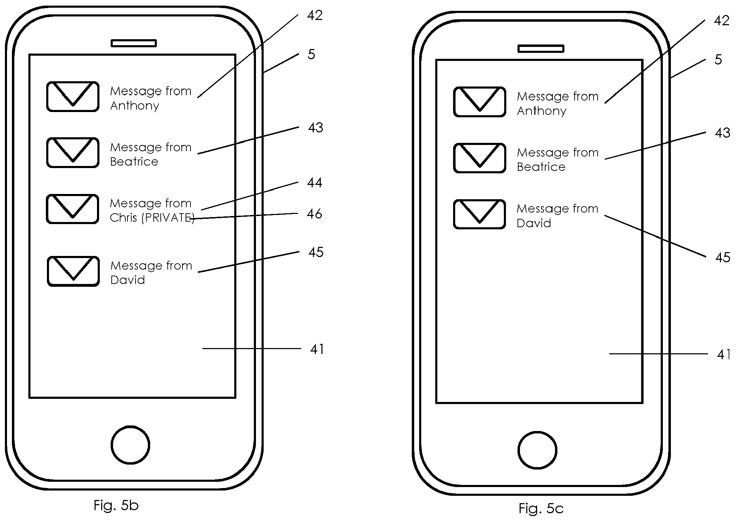

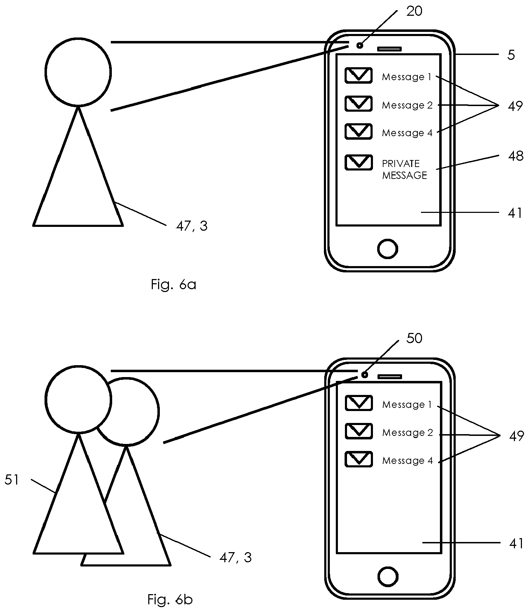

Ausgehend von einem uneingeschränkten Zugang 31 (vgl. Fig. 5b) umfasst das in Fig. 3 gezeigte Verfahren folgende Schritte, welche als Funktionsblock dargestellt sind. Zunächst wird ein Bildsignal mit einer Kamera des zweiten Endgeräts 5 erfasst 32 (vgl. Fig. 6a-b). Anschließend wird eine Gesichtsdetektion mit dem erfassten Bildsignal durchgeführt 33. Nach Abschluss der Gesichtsdetektion wird die während der Gesichtsdetektion ermittelten Anzahl der Gesichter in dem erfassten Bildsignal überprüft 34. Falls 34 die Anzahl der Gesichter größer als eins ist (vgl. Fig. 6b), wird der Zugang eingeschränkt 35 (vgl. Fig. 3c). Andernfalls 36 wird das nächste Bildsignal erfasst, sodass während des uneingeschränkten Zugangs eine kontinuierliche Überwachung 37 der Anzahl der Gesichter im Sichtfeld der Kamera erfolgt. Sobald der Zugang eingeschränkt wird, kann die Überwachung abgebrochen werden.

Wenn das zweite Endgerät 5 einen Bildschirm zur Anzeige von privaten und sonstigen Daten aufweist, werden die privaten Daten bei eingeschränktem Zugang vollständig ausgeblendet und nur die sonstigen Daten angezeigt werden. Im Fall des uneingeschränkten Zugangs wird ein visueller Hinweis auf den uneingeschränkten Zugang angezeigt am Bildschirm in Form eines farbigen (z.B. grünen) Rahmens angezeigt. Wenn bei eingeschränktem Zugang ein Ereignis betreffend private Daten eintritt, wird das Ereignis in einer eingeschränkten Form auf dem Bildschirm angezeigt.

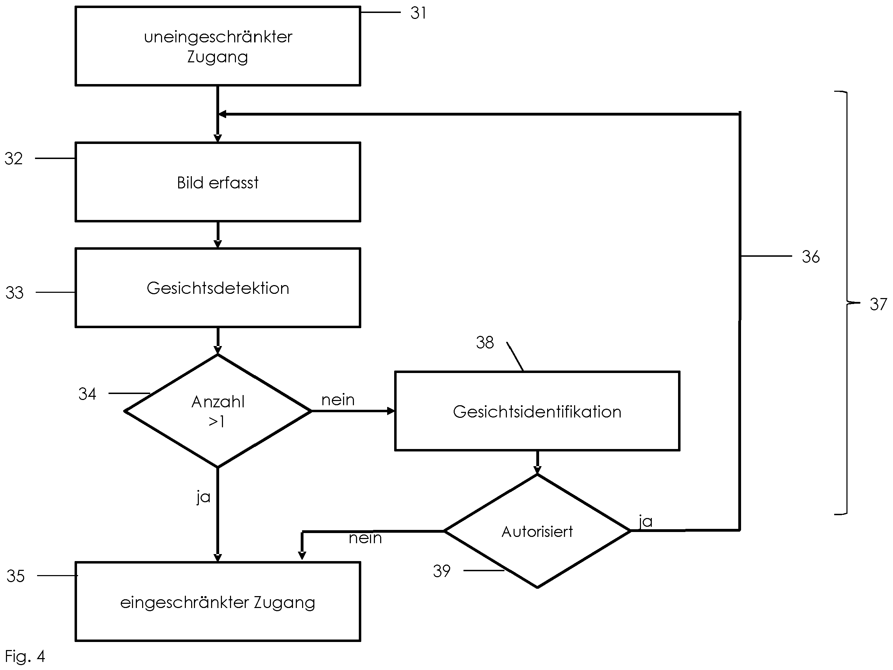

Fig. 4 zeigt eine erweiterte Variante der Zugangssteuerung 17 am zweiten Endgerät 5. Dabei wird während der Überwachung 37 zusätzlich eine Gesichtsidentifikation 38 durchgeführt. Es folgt eine Überprüfung 39 der Autorisierung des Benutzers, d. h. es Empfängers 3. Falls der Benutzer nicht autorisiert ist, wird der Zugang eingeschränkt 35. Die Darstellung in Fig. 4 ist vereinfacht; die Gesichtsidentifikation 38 kann beispielsweise nur stichprobenartig oder z.B. bei jedem zehnten Durchlauf der Überprüfung 37 durchgeführt werden, um die Ressourcen des zweiten Endgeräts 5 (CPU-Zeit, Batterie) zu schonen.

Gemäß einer weiteren Variante der Zugangssteuerung 17 am zweiten Endgerät 5 kann zum Erlangen des uneingeschränkten Zugangs eine biometrische Authentifizierung eines Benutzers mit einer Gesichtsidentifikation und optional einer Irisidentifikation durchgeführt werden. Dabei erfolgt vor einer Freigabe des uneingeschränkten Zugangs ein Erfassen eines Bildsignals mit der Kamera des zweiten Endgeräts 5, Durchführen einer Gesichtsdetektion mit dem erfassten Bildsignal und Ermittelten der Anzahl der Gesichter in dem erfassten Bildsignal. Im Anschluss daran erfolgt die Freigabe nur dann, wenn die Anzahl der Gesichter genau eins ist.

In Fig. 5a-c sind die verschiedenen Zustände des zweiten Endgeräts 5 dargestellt, welche im Rahmen der Anwendung des gegenständlichen Verfahrens eingenommen werden können. Das zweite Endgerät 5 ist in diesem Beispiel ein Smartphone mit einem Bildschirm 41. In Fig. 5a ist das zweite Endgerät 5 bei gesperrtem Zugang dargestellt. Am Bildschirm 41 wird ein allgemeines Symbol angezeigt, welches die Zugangssperre symbolisiert und erkennbar macht. In diesem Zustand wird im Allgemeinen kein Zugang zu den am zweiten Endgerät 5 gespeicherten Daten gewährt; insbesondere werden keine persönlichen Daten eines Benutzers des zweiten Endgeräts 5 angezeigt. Allenfalls können technische Daten (wie Uhrzeit, Signal, Netzinformation, etc.) angezeigt werden. Wenn sich ein berechtigter Benutzer authentisiert, z.B. indem er seine Identität nachweist, und erfolgreich authentifiziert wird, wechselt das zweite Endgerät 5 üblicher Weise direkt in einen Zustand mit uneingeschränktem Zugang zu sämtlichen am zweiten Endgerät 5 gespeicherten Daten. Dieser Zustand ist in Fig. 5b dargestellt. In diesem Zustand werden am Bildschirm 41 des zweiten Endgeräts 5 Nachrichten von vier Kontakten, namentlich eine erste Nachricht 42 vom Kontakt "Anthony", eine zweite Nachricht 43 vom Kontakt "Beatrice", einer dritte Nachricht 44 vom Kontakt "Chris" und eine vierte Nachricht 45 vom Kontakt "David" angezeigt. Der Kontakt "Chris" ist als privater Kontakt markiert. Die dritte Nachricht 44 ist daher mit dem visuellen Hinweis 46 "PRIVATE" dargestellt; durch den Hinweis 46 kann der Benutzer des zweiten Endgeräts 5 erkennen, dass ein uneingeschränkter Zugang gewährt wird.

Sobald im Rahmen der am zweiten Endgerät 5 aktiv ausgeführten Zugangssteuerung 17 im Bildsignal einer Kamera mehr als ein Gesicht erkannt wird, wechselt das zweite Endgerät 5 in einen Zustand mit eingeschränktem Zugang. Dieser Zustand ist in Fig. 5c dargestellt. In diesem Zustand werden die erste Nachricht 42, die zweite Nachricht 43 und die vierte Nachricht 45 angezeigt. Die dritte Nachricht 44 stammt von dem als privat markierten Kontakt "Chris" und ist daher ebenfalls als privat markiert und gehört somit zu den privaten Daten. Eine nach dem gegenständlichen Verfahren übermittelte private Nachricht, die nur unter der Bedingung einer aktiven Zugangssteuerung 17 an das zweite Endgerät 5 übermittelt wurde, wird jedenfalls als privat und somit dem privaten Daten zugehörig behandelt. Bei dem in Fig. 5c dargestellten eingeschränktem Zugang wird kein Hinweis auf den Inhalt oder die Existenz der privaten dritten Nachricht 44 angezeigt. Ein Beobachter, welcher zusammen mit dem Benutzer den Bildschirm 41 beobachtet, erfährt daher nicht von der Existenz der dritten Nachricht 44. Nachdem auch der visuelle Hinweis 46 ausgeblendet ist, kann der Beobachter auch nicht erkennen, dass der Zugang derzeit eingeschränkt ist.

Fig. 6a und 6b zeigen die mit den Zuständen gemäß Fig. 5b und 5c korrespondierenden Anwendungsfälle. In Fig. 6a ist ein erster Anwendungsfall gezeigt, in dem ein autorisierter Benutzer 47, nämlich der Empfänger 3, das zweite Endgerät 5 verwendet. Das zweite Endgerät 5 wurde bereits entsperrt und befindet sich in einem Zustand mit uneingeschränktem Zugang zu privaten Daten 48 und sonstigen Daten 49. Mit einer Frontkamera 50 des zweiten Endgeräts 5, welche auf derselben Seite wie der Bildschirm 41 angeordnet ist, wird wiederholt ein Bild erfasst und die Anzahl der Gesichter in dem erfassten Bild erkannt (vgl. Fig. 3). Im ersten Anwendungsfalls befindet sich nur der autorisierte Benutzer 47 im Sichtfeld der Frontkamera 50, sodass bei jeder Überprüfung nur ein Gesicht erkannt wird und somit der uneingeschränkte Zugang aufrechterhalten wird.

In Fig. 6b ist ein zweiter Anwendungsfall gezeigt. Dabei tritt ein Beobachter 51 dem autorisierten Benutzer 47 zur Seite und in das Sichtfeld der Frontkamera 50. Die Überprüfung erkennt sofort, dass die Anzahl der erkannten Gesichter größer als eins ist, und versetzt das zweite Endgerät 5 in den Zustand mit eingeschränktem Zugang (vgl. Fig. 5c). Es werden am Bildschirm nur noch die sonstigen Daten 49 angezeigt. Alle privaten Daten 48 wurden von der Anzeige ausgeblendet, sodass deren Existenz und Inhalt vor dem Beobachter 51 verborgen ist.

## Patentansprüche

1. Computerimplementiertes Verfahren zur Zugangssteuerung zu einer privaten Nachricht (1) eines Benutzers eines ersten Endgeräts (4) an einen Benutzer eines zweiten Endgeräts (5), das Verfahren umfassend die Schritte:
- Erfassen (8) der privaten Nachricht (1) und des Empfängers (3) am ersten Endgerät (4);
- Ermitteln (9) einer Adresse des zweiten Endgeräts (5) auf Basis des erfassten Empfängers;
- Senden einer Abfrage (13, 16) nach dem Status einer Zugangssteuerung vom ersten Endgerät (4) an das zweite Endgerät (5) ;
- Senden einer privaten Nachricht (1) vom ersten Endgerät (4) an das zweite Endgerät (5), nur wenn die Abfrage (16) vom zweiten Endgerät (5) mit einer Statusmitteilung (19) beantwortet wurde und gemäß der Statusmitteilung (19) die Zugangssteuerung (17) am zweiten Endgerät (5) aktiv ist.

2. Verfahren gemäß Anspruch 1, **dadurch gekennzeichnet, dass** das erste Endgerät (4) eine Fehlermeldung ausgibt und die private Nachricht (1) löscht, wenn gemäß der Statusmitteilung die Zugangssteuerung am zweiten Endgerät (5) dauerhaft inaktiv ist.

3. Verfahren gemäß Anspruch 1 oder 2, **dadurch gekennzeichnet, dass** das erste Endgerät (4) einen Zeitschalter (15) mit einer vordefinierten Dauer startet, wenn gemäß der Statusmitteilung (14) die Zugangssteuerung am zweiten Endgerät (5) vorübergehend inaktiv ist, und nach Ablauf des Zeitschalters (15) eine neue Abfrage (16) nach dem Status einer Zugangssteuerung an das zweite Endgerät (5) sendet.

4. Verfahren gemäß einem der vorstehenden Ansprüche, wobei auf dem zweiten Endgerät (5) bei aktiver Zugangssteuerung (17) am zweiten Endgerät (5) ein Zugang zu einer vom ersten Endgerät (4) empfangenen privaten Nachricht (1) eingeschränkt oder uneingeschränkt sein kann, umfassend die folgenden Schritte bei uneingeschränktem Zugang (31):
- Erfassen (32) eines Bildsignals mit einer Kamera des zweiten Endgeräts (5);
- Durchführen (33) einer Gesichtsdetektion mit dem erfassten Bildsignal;
- kontinuierliches Überwachen (34) der bei der Gesichtsdetektion ermittelten Anzahl der Gesichter in dem erfassten Bildsignal, wobei der Zugang eingeschränkt wird (35), wenn die Anzahl der Gesichter größer als eins ist.

5. Verfahren gemäß Anspruch 4, wobei das zweite Endgerät (5) einen Bildschirm zur Anzeige der privaten Nachricht (1) aufweist, **dadurch gekennzeichnet, dass** die private Nachricht (1) bei eingeschränktem Zugang (35) vollständig ausgeblendet wird.

6. Verfahren gemäß Anspruch 5, **dadurch gekennzeichnet, dass** bei uneingeschränktem Zugang (31) ein visueller Hinweis auf den uneingeschränkten Zugang angezeigt wird.

7. Verfahren gemäß Anspruch 5 oder 6, **dadurch gekennzeichnet, dass** bei eingeschränktem Zugang (35) Ereignisse betreffend private Nachrichten in einer eingeschränkten Form auf dem Bildschirm angezeigt werden.

8. Verfahren gemäß einem der Ansprüche 4 bis 7, **dadurch gekennzeichnet, dass** bei aktiver Zugangssteuerung (17) zum Erlangen des uneingeschränkten Zugangs (31) eine Authentifizierung eines Benutzers durchgeführt wird, wobei vor einer Freigabe des uneingeschränkten Zugangs (31) ein Erfassen eines Bildsignals mit der Kamera des zweiten Endgeräts (5), Durchführen einer Gesichtsdetektion mit dem erfassten Bildsignal und Ermittelten der Anzahl der Gesichter in dem erfassten Bildsignal erfolgt, wobei die Freigabe nur erfolgt, wenn die Anzahl der Gesichter genau eins ist.

9. Verfahren gemäß Anspruch 8, **dadurch gekennzeichnet, dass** die Authentifizierung eine biometrische Authentifizierung, insbesondere eine Gesichtsidentifikation und/oder eine Irisidentifikation umfasst.

10. Computerprogrammprodukt, das direkt in den internen Speicher eines digitalen Computers geladen werden kann und Softwarecodeabschnitte umfasst, mit denen die am ersten Endgerät (4) auszuführenden Schritte gemäß einem der Ansprüche 1 bis 9 ausgeführt werden, wenn das Computerprogramm auf einem Computer läuft.

11. Computerprogrammprodukt, das direkt in den internen Speicher eines digitalen Computers geladen werden kann und Softwarecodeabschnitte umfasst, mit denen die am zweiten Endgerät (5) auszuführenden Schritte gemäß einem der Ansprüche 1 bis 9 ausgeführt werden, wenn das Computerprogramm auf einem Computer läuft.
